# EUROPÄISCHE PATENTSCHRIFT

(11) **EP 2 418 986 B1**
(45) Veröffentlichungstag und Bekanntmachung des Hinweises auf die Patenterteilung: **22.03.2017**
(21) Anmeldenummer: 10713298.7
(22) Anmeldetag: 13.04.2010
(51) Int. Cl.: A47J 31/36

(54) **VORRICHTUNG ZUM AUSLEITEN EINES EXTRAKTIONSPRODUKTS AUS EINER PORTIONSVERPACKUNG; ANSTECHVORRICHTUNG UND EXTRAKTIONSGERÄT**
DEVICE FOR GUIDING AN EXTRACTED PRODUCT OUT OF A PORTION PACKAGING; OPENING DEVICE AND EXTRACTION DEVICE
DISPOSITIF DE SORTIE D'UN PRODUIT D'EXTRACTION D'UN EMBALLAGE EN PORTION, DISPOSITIF DE PERÇAGE ET APPAREIL D'EXTRACTION

(30) Priorität: 15.04.2009 EP 09405066
(43) Veröffentlichungstag der Anmeldung: 22.02.2012
(73) Patentinhaber: Qbo Coffee GmbH, 8304 Wallisellen (CH)
(72) Erfinder: DEUBER, Louis, CH-8805 Richterswil (CH)
(74) Vertreter: Frei Patent Attorneys
(86) Internationale Anmeldenummer: PCT/CH2010/000098
(87) Internationale Veröffentlichungsnummer: WO 2010/118544

(56) Entgegenhaltungen:
- EP-A- 0 521 188
- WO-A-95/25457
- WO-A2-2008/023057
- US-A- 5 897 899

## Beschreibung

Die Erfindung betrifft Extraktionsgeräte zum Zubereiten von Getränken oder dergleichen aus einem in einer Kapsel enthaltenen Extraktionsgut, beispielsweise gemahlenem Kaffee. Sie betrifft insbesondere eine Ausleitvorrichtung zum Ausleiten eines Extraktionsprodukts aus der Kapsel, eine Anstechvorrichtung zum Anstechen der Portionsverpackung, und ein Extraktionsgerät mit einer solchen Ausleitvorrichtung und/oder Anstechvorrichtung.

Extraktionsgeräte zum Zubereiten von Getränken oder dergleichen aus einem in einer Portionsverpackung vorhandenen Extraktionsgut sind beispielsweise als Kaffee- oder Espressomaschinen bekannt und erfreuen sich nach wie vor steigender Beliebtheit. In vielen entsprechenden Systemen sind die Portionsverpackungen als Kapseln ausgebildet, in denen das Extraktionsgut bspw. luftdicht abgeschlossen ist. Für die Extraktion wird die Kapsel an zwei einander gegenüberliegenden Seiten angestochen. Auf der ersten Seite wird eine Extraktionsflüssigkeit - im Allgemeinen heisses Wasser - eingeleitet. Auf der zweiten Seite wird das Extraktionsprodukt aus der Kapsel ausgeleitet. Je nach zuzubereitendem Getränk und System kann dabei im Innern der Kapsel ein erheblicher Druck von beispielsweise 5-20 bar herrschen, was grosse Anforderungen an den Anstech- und Ausleitmechanismus stellt.

Als entsprechende Systeme sind zunächst die Kapselsysteme bekannt geworden, bei denen Wasser auf einer Injektionsseite in die Kapsel eingeleitet wird, während die Kapsel auf der Extraktionsseite zunächst unversehrt ist. Unter dem Druck des eingeleiteten Wassers wird die extraktionsseitige Begrenzung der Kapsel gegen eine beispielsweise gerippte Struktur gedrückt und dabei so gespannt, dass sie reisst und das Extraktionsprodukt aus der Kapsel abfliessen kann. Ein solches System kann nur mit einem Material funktionieren, dass nur sehr wenig plastisch dehnbar ist und eine Reissspannung aufweist, die erreicht wird, wenn das Material durch den Kapselinnendruck gegen eine Rippe oder dergleichen gedrückt wird. Als solches Material ist bisher nur Aluminium verwendbar. Beispiele für solche Systeme findet man in der EP 0 521 188 und der US 5,897,899.

Weiter sind auch Systeme bekannt geworden, bei denen die Kapsel auch extraktionsseitig durch eine Perforationsspitze aufgestochen wird, beispielsweise schon durch das Positionieren in der Brühkammer und vor dem Einsetzen des Brühprozesses. Bei solchen Systemen wird das Extraktionsprodukt durch die Perforationsspitze geleitet; der Kaffeesatz bleibt in der Kapsel zurück. Die Kapselwandung solcher Systeme kann aus Kunststoff - bspw. Polypropylen mit einer sauerstoffdichten Sperrschicht versehen - sein, wobei dann aufgrund der sehr grossen Reissdehnung solcher Stoffe die Perforationsspitzen sehr scharf sein müssen; das Anstechen von solchen Kunststoffkapseln ist nicht trivial.

Die WO 2008/023057 zeigt ein entsprechendes Mittel zum Penetrieren einer Portionsverpackung mit Perforationsspitzen, die je eine zur Perforationsrichtung geneigte Fläche mit Öffnungen in einer Lochsieb-Struktur aufweisen. Durch dieses Mittel sollen verbesserte Durchleiteigenschaften erreicht werden. Nachteilig ist jedoch das recht aufwändige Herstellungsverfahren.

EP 1 783 066 oder die WO 95/25457 zeigen je eine Ausleitvorrichtung mit einer Vielzahl von Perforationsspitzen, wobei jede Perforationsspitze eine Durchleitöffnung oder eine Durchleitfurche aufweist. Auch wenn die Ausleitvorrichtung in diesen Schriften "Filterplatte" genannt wird, sind die Durchleitöffnungen doch in den jeweiligen Perforationsspitzen vorhanden und nicht in einem plattenartigen Element, welches ausserhalb der Kapsel angeordnet ist. Die Durchleitöffnungen solcher Ausleitvornchtungen weisen notwendigerweise einen gewissen Mindestdurchmesser von bspw. ca. 400 µm auf, damit überhaupt genügend Flüssigkeit genügend zuverlässig und verstopfungssicher durchgeleitet werden kann. Bei dieser Grösse hat die Öffnung aber nur eine beschränkte Filterwirkung, so dass Feinanteile des Kaffeesatzes (bzw. Rückstände von anderem Extraktionsgut) ins Getränk gelangen können - ausser das Extraktionsgut erfüllt sehr hohe Anforderungen an die Regelmässigkeit der Korngrösse, was einen Mehraufwand nach sich zieht. Es ist eine Aufgabe der Erfindung, eine Ausleitvorrichtung und eine Anstechvorrichtung für Extraktionsgeräte sowie ein entsprechendes Extraktionsgerät zu schaffen, welche Nachteile des Standes der Technik überwinden und welche gute Durchleiteigenschaften aufweisen und in der Herstellung einfach sind.

Diese Aufgabe wird gelöst durch die Erfindung, wie sie in den Patentansprüchen definiert ist.

Gemäss einem ersten Aspekt der Erfindung wird eine Ausleitvorrichtung zur Verfügung gestellt, welche eine Auflagefläche zum Anliegen an einen Oberflächenbereich einer Kapsel sowie mindestens ein aus dieser Auflagefläche herausragendes Perforationselement aufweist, wobei die Auflagefläche durch einen Siebträgern mit einem Siebelement definiert wird. Der Siebträger weist mindestens eine vom Siebelement überspannte Durchleitöffnung auf. Das Siebelement weist eine Mehrzahl von Sieblöchern auf, durch die das Extraktionsprodukt ausgeleitet werden kann, welches durch eine vom Perforationselement erzeugte Öffnung aus der Kapsel austritt.

Das Perforationselement ragt von der Auflagefläche in eine mediale Richtung, d.h. in Bezug auf die Kapsel in Richtung das Kapselinnere. In diesem Text werden generell die Richtungen "innen" und "aussen" auf die Kapsel bezogen.

Die Auflagefläche bildet während des Anstechens und während des Brühprozesses eine Begrenzungsfläche für die Kapsel nach aussen. Auch wenn die Kapsel unter Druck ist wird kein Teil der Kapsel während des Prozesses aussen an der von der Auflagefläche definierten Ebene sein. Die Auflagefläche ist flächig in dem Sinn, dass eine Kapsel mit einer Kunststoffwandung aus beispielsweise Polypropylen und von bspw. 0.3 mm Wandstärke flächig an der Kapsel anliegt, wenn sie mit genügend Kraft gegen die Auflagefläche gedrückt wird (dabei wird sie durch die Perforationsspitzen perforiert); ein hydrostatischer Innendruck in der Kapsel ist weder für die Perforation noch für das flächige Anliegen nötig.

Das Siebelement kann bspw. als Mikrolochfolie ausgebildet sein.

Die durch ein Grundelement (bspw. die vom Siebträger mit dem Siebelement gebildete Brühsiebplatte) definierte Auflagefläche kann eine Auflageebene sein. Sie kann aber auch aus mehreren Auflageebenen zusammengesetzt sein, oder sie kann gekrümmt sein. Die Wirkungsweise der Erfindung ist nicht von der Form der Auflagefläche abhängig.

Dieser Ansatz erlaubt eine besonders einfache Konstruktion. So kann die Auflagefläche durch einen abschnittsweise flächigen Siebträger geformt sein, der verhältnismässig (im Vergleich zu den Sieblöchern) grosse Durchtrittsöffnungen aufweisen kann. Auf diesen Siebträger kann ein Sieb der an sich bekannten Art mit Mikrolöchern (Mikrolochfolie) flächig aufgebracht sein. Die genannten Sieblöcher werden dort durch die Mikrolöcher des Siebs gebildet, wo das Sieb über eine der Durchtrittsöffnungen gespannt ist. Die Durchtrittsöffnungen oder mindestens einige der Durchtrittsöffnungen befinden sich vorzugsweise im Bereich der Perforationselemente. Diese Siebträgertechnologie ist an sich bekannt für professionelle Gastrokaffeemaschinen, wurde aber - weil zu einer komplementären Technologie mit ganz anderen Anforderungen gehörend - für Kaffeemaschinen zum Zubereiten von Getränken aus verkapseltem Extraktionsgut noch nie in Betracht gezogen.

Die Perforationselemente sind vorzugsweise dazu ausgebildet, eine Kunststoffwandung, bspw. eine Polypropylenwandung einer Kapsel mit einer Wandstärke von zwischen 0.2 mm und 0.4 mm, insbesondere von 0.3 mm zu perforieren. Material dieser Beschaffenheit und Wandstärke weist eine grosse Zähigkeit aus, mit entsprechenden Anforderungen an die Perforationsspitze und/oder Perforationskante. Geeignet sind insbesondere Elemente, welche eine entsprechend scharfe Perforationsspitze aufweisen. Die Perforationselemente sollten also so ausgebildet sein, dass ein Kapselkörper aus Polypropylen mit einer Wandstärke perforiert wird, wenn er so weit gegen die Ausleitvorrichtung bzw. gedrückt wird, bis die Kapsel neben den Perforationselementen flächig an der Auflagefläche anliegt. Diese Bedingungen gelten vorzugsweise auch für die nachstehend beschriebene Injektorvorrichtung.

Die Perforationselemente sind im Allgemeinen frei von im Wesentlichen axial durch die Perforationselemente verlaufenden Durchleitkanälen (axial bezeichnet hier die Richtung senkrecht zur Auflagefläche). Sie dienen lediglich der Perforation der Kapsel, wobei die eigentliche Trennung zwischen Extraktionsprodukt einerseits und dem Satz andererseits durch das Brühsieb erfolgt. Es kann sich wie von Kaffee-Vollautomaten bekannt eine Kompaktierung des gegen das Brühsieb gedrückten Kaffeesatzes ergeben. Die Perforationselemente selbst können daher relativ einfache, ungeschlitzte und kompakte, öffnungslose Elemente sein, bspw. gemäss dem zweiten Aspekt der Erfindung blechartig ausgebildet.

Die Durchleitöffnungen - und mit ihnen der Ort der Trennung zwischen Extraktionsprodukt einerseits und dem Satz andererseits - sind hingegen am Siebträger bzw. Siebelement vorhanden und also in der Auflagefläche angeordnet.

Als Siebelement wird ein Element bezeichnet, dessen Sieblöcher von einer solchen Grösse sind, dass das Extraktionsprodukt durchfliessen kann, dass jedoch das Extraktionsgut zurückgehalten wird. Im Fall von gemahlenem Kaffee besteht eine Siebwirkung bis zu einer Lochgrösse von etwa 0.3-0.4 mm. Die Sieblöcher sind vorzugsweise von einer Grösse, die auch vergleichsweise feinen Staub des Extraktionsguts zurückhält. Es hat sich gezeigt, dass ein bevorzugter Durchmesserbereich für die Sieblöcher zwischen 0.1 mm und 0.3 mm, besonders bevorzugt zwischen 0.15 und 0.25 liegt. Die Sieblöcher können zylindrisch sein. Sie können jedoch auch konisch mit einem zur Kapsel hin abnehmenden Durchmesser sein, wobei sich dann der erwähnte Durchmesserbereich auf der kapselseitigen Oberfläche des Siebelements gemessenen Durchmesser bezieht.

Bevorzugt hat das Perforationselement in einer Projektion auf die Auflagefläche eine Form, die nicht konvex ist, so dass das Perforationselement eine Teilfläche der Auflagefläche aufspannt.

Gemäss einem zweiten Aspekt der Erfindung wird eine Anstechvorrichtung zur Verfügung gestellt, die als Ausleitvorrichtung - beispielsweise gemäss dem ersten Aspekt der Erfindung - oder als Injektorvorrichtung zum Einleiten der Extraktionsflüssigkeit ausgebildet sein kann. Die Anstechvorrichtung weist eine Auflagefläche zum Anliegen an einen Oberflächenbereich einer Kapsel sowie mindestens ein aus dieser Auflagefläche herausragendes Perforationselement auf, wobei das mindestens eine Perforationselement ein von der Auflagefläche bspw. ungefähr senkrecht abstehendes Blechs aufweist. Das Blech ist gekrümmt, geknickt (z.B. abgekantet) oder aus mehreren in einem Winkel zueinander stehenden Blechstücken zusammengesetzt.

Diese Eigenschaften des Perforationselement bewirken den wichtigen Vorteil, dass das Perforationselement einfach herstellbar ist. Als (mindestens teilweise vom Träger, der die Auflagefläche bildet, separates Teil hergestellt kann es einfach an diesem befestigt werden. Die Befestigung kann bspw. über Befestigungsnasen des Perforationselements erfolgen, die in entsprechende Öffnungen des Grundelements eingreifen und dort befestigt sind, indem sie bspw. mit dem Grundkörper verschweisst, verklebt oder verlötet sind. Das Perforationselement kann auch mindestens teilweise mit dem Träger einstückig sein und bspw. durch eine von diesem abgebogene Partie gebildet werden.

Ausserdem ist durch die gekrümmte, oder aus mehreren in einem Winkel zueinander stehenden Blechstücken zusammengesetzte Form selbst verstärkend, d.h. für eine gegebene Blechdicke - eine solche kann zwischen 0.05 mm und 0.6 mm betragen - ist die mechanische Stabilität viel höher als die Stabilität eines blossen von der Auflagefläche wegragenden Blechstreifens.

Trotz der einfachen Herstellbarkeit bewirken Perforationselemente gemäss dem erfindungsgemässen Ansatz bei geeigneter Ausformung der Kanten und/oder von Spitzen ein effektives Aufstechen und gute Durchleiteigenschaften.

Aufgrund der Ausgestaltung des Perforationselements als gekrümmtes oder abgekantetes Blech oder aus mehreren in einem Winkel zueinander stehenden Blechstücken zusammengesetztes Bauteil spannt das Perforationselement in der Auflagefläche mindestens eine Teilfläche auf, die vom Perforationselement teilweise umgeben ist. In dieser Teilfläche kann eine Zu- oder Ausleitöffnung oder können mehrere Zu- oder Ausleitöffnungen für die Extraktionsflüssigkeit bzw. das Extraktionsprodukt vorhanden sein oder in diese hineinragen. Sofern der zweite Aspekt der Erfindung mit dem ersten Aspekt kombiniert wird, befinden sich die Siebflächen bevorzugt mindestens teilweise im Bereich der aufgespannten Teilfläche(n).

Das Blech weist vorzugsweise nicht eine konstante Breite (entsprechend der Höhe des Perforationselements über der Auflagefläche) auf, sondern einen Breitenverlauf, der bewirkt, dass das Perforationselement eine Perforationsspitze bildet. Diese kann bspw. ungefähr in einer Symmetrieebene des Perforationselements liegen.

Zusätzlich oder eventuell als Alternative zum Zulaufen in einer Spitze kann das Blech an der von der Auflagefläche wegragenden Kante geschärft sein, so dass diese eine Perforationskante oder Schneidkante bildet.

Gemäss einer Ausführungsform weist das Perforationselement ein einstückiges, bspw. durch Stanzen oder Laserschneiden und anschliessendes Umformen herstellbares, entlang einer Abkantlinie abgekantetes Blech mit zwei flachen, einen Winkel zueinander bildenden Partien auf. Die Breite der beiden Partien läuft zur Abkantlinie hin zu, so dass sich eine Spitze bildet. Wenn das Perforationselement bezüglich einer Ebene symmetrisch ist, kann das Blech vor dem Abkanten als spiegelsymmetrisches Fünf- oder Sechseck ausgebildet sein.

Nachfolgende Bemerkungen betreffend einen Rückhaltesteg und betreffend die Form des Perforationselements betreffen beide Aspekte der Erfindung, d.h. die entsprechenden vorteilhaften Merkmale können bei Vorrichtungen gemäss dem ersten Aspekt, gemäss dem zweiten Aspekt und gemäss beiden Aspekten vorhanden sein:

Gemäss einer besonders bevorzugten Ausführungsform weist das Perforationselement bzw. mindestens eines der Perforationselemente mindestens einen Rückhaltesteg auf. Dieser ist in unmittelbarer Nähe zum die Schneidkante bildenden Teil ("Perforationskantenteil") des Perforationselements angeordnet und ragt wie dieses von der Auflagefläche weg in Richtung des beim Extraktionsvorgang von der Kapsel eingenommenen Raums. Eine Kante zur Kapsel hin ist jedoch mindestens bereichsweise nicht schneidend, d.h. nicht so scharf, dass die Kapselwandung durchstossen oder durchschnitten würde. Bevorzugt hat der Rückhaltesteg - mindestens dort, wo die Kante nicht schneidend ist - eine geringere Höhe als die perforierende Kante und stösst bspw. an das Perforationskantenteil an. Gemäss bevorzugten Ausführungsformen entspricht die vom Perforationselement aufgespannte Fläche mindestens teilweise der Fläche einer Durchgangsöffnung, d.h. bei einer Ausleitvorrichtung eine mit Sieblöchern (bspw. rasterartig angeordnet) versehene Fläche. Besonders bevorzugt ist das Perforationselement so ausgebildet, dass der Perforationskantenteil des Perforationselements allein schon eine Fläche aufspannt, d.h. der vom Perforationskantenteil der Kapsel zugefügte Schnitt verläuft gekrümmt oder weist mehrere in einem Winkel zueinander stehende Abschnitte auf.

Der Rückhaltesteg verläuft dann bevorzugt mindestens teilweise im Innern der vom Perforationskantenteil aufgespannten Fläche.

Der Rückhaltesteg verhindert auf der Seite der Ausleitvorrichtung, dass die Wandung (Kapselfolie) der angestochenen Kapsel beim Brühprozesses (Extraktionsprozess) aufgrund des im Innern der Kapsel herrschenden Drucks gegen die Siebflächen gedrückt wird, wodurch der Durchtritt des Extraktionsprodukts durch die Siebflächen verhindert werden könnte. Er ist besonders geeignet im Zusammenhang mit Kapselwandungen aus Kunststoff, beispielsweise Polypropylen. Kunststoffe sind im Unterschied zu Aluminiumfolie meist sehr dehnbar und spannkräftig, und das ermöglicht dass der Rückhaltesteg bspw. als von der Auflagefläche weg ragendes Blech ausgebildet ist, da ein solches ohne speziell angeschärfte Kante bei entsprechender Ausgestaltung die Kapselwandung nicht ohne Weiteres durchtrennt. Der Rückhaltesteg kann aber eine scharfe Spitze oder einen scharfen Kantenabschnitt aufweisen, um die Perforationswirkung des Perforationskantenteils zu verstärken.

Bei der Injektorvorrichtung kann ebenfalls ein Rückhaltesteg vorhanden sein, der die öffnende Wirkung der Perforationskante zusätzlich verstärkt. Ganz allgemein kann gegebenenfalls mindestens ein Rückhaltesteg bei der Ausleitvorrichtung, bei der Injektorvorrichtung oder bei beiden Vorrichtungen vorhanden sein.

Beispielsweise sind wie erwähnt mindestens im Bereich der vom Perforationselement aufgespannten Fläche Sieblöcher vorhanden.

Der Rückhaltsteg kann an das Perforationskantenteil einen Winkel zu diesem bildend anstossen.

Gemäss bevorzugten Ausführungsformen der Ausleitvorrichtung ist der Rückhaltesteg so angeordnet, dass er sich mindestens teilweise über einen Bereich mit Sieblöchern erstreckt, also eine Durchleitöffnung überquert.

Das Perforationselement kann mindestens zwei einen Winkel zueinander bildende Blechpartien aufweisen, die beispielsweise eine zu ihrer gemeinsamen Kante hin zulaufende Breite haben. Alternativ dazu kann das Perforationselement bereichsweise in einer Projektion auf die Auflagefläche die Form eines bspw. nicht vollständig umlaufenden Kreisbogens haben und angespitzt sein, also die Form eines angeschnittenen Rohres haben. Eine weitere Partie, welche den Rückhaltesteg oder die Perforationskante bilden kann, kann im Innern der vom Winkel bzw. vom Kreisbogen aufgespannten Fläche verlaufen und optional aus dieser hinausragen; diese Partie kann flach oder gebogen/gewinkelt sein und optional aus mehreren Teilen bestehen.

Gemäss einer speziellen Ausführungsform kann das Perforationselement mit Schneidkantenteil und Rückhaltesteg aus einem einzigen Teil gefertigt sein, bspw. aus einem schräg und eine Schneidkante bildend angeschnittenen Metallrohrelement. Die Schneidkante des Metallrohrelements bildet gleichzeitig die Schneidkante des Perforationselements. Ein Teilstück des Metallrohrelements unterhalb der Schneidkante ist den Rückhaltesteg bildend nach innen abgebogen.

Gemäss einer weiteren speziellen Ausführungsform kann der Rückhaltesteg aus einem anderen Material sein als der Schneidkantenteil. In dieser Ausführungsform kann der Rückhaltesteg auch als vom Perforationselement separates Teil aufgefasst werden.

Insbesondere kann die Brühsieb- beziehungsweise Injektorplatte Steg-Öffnungen aufweisen. Die Rückhaltestege können an einem Trägerkörper - beispielsweise aus spritzgegossenem Kunststoff - angeformt sein und von aussen durch die Steg-Öffnungen nach innen ragen. Diese Ausführungsformen haben den Vorteil, dass für die Rückhaltestege keine zusätzlichen Material- und Montagekosten entstehen. Die Kosten für die Fertigung eines Kunststoffkörpers sind praktisch unabhängig davon, ob zusätzliche kleine Vorsprünge (welche die Rückhaltestege bilden) vorhanden sind oder nicht, und ein eigenständiger Befestigungsvorgang für die Rückhaltestege ist nicht nötig.

Ebenfalls Gegenstand der Erfindung ist ein Extraktionsgerät, bspw. Kaffeemaschine, die eine Ausleitvorrichtung und/oder Injektorvorrichtung der vorstehend beschriebenen Art aufweist. Weitere Elemente des Geräts wie Brühflüssigkeitsaufbereitung, Brühmodul, Ausgabeeinheit, Gehäuse etc. des Extraktionsgerätes können beispielsweise wie an sich vom Stand der Technik her bekannt ausgeformt sein und sind nicht Gegenstand der vorliegenden Erfindung weshalb sie hier auch nicht näher erläutert werden. Der Fachperson sind solche Geräte an sich zur Genüge bekannt. Die Fachperson wird ausserdem in der Literatur, bspw. WO 2008/023057, Wege finden, diese auszuführen.

Ausführungsbeispiele der Erfindung werden nachfolgend anhand von Zeichnungen beschrieben. In den Zeichnungen bezeichnen gleiche Bezugszeichen gleiche oder analoge Elemente. Die Zeichnungen sind nicht massstäblich und zeigen teilweise einander entsprechende Elemente in von Figur zu Figur unterschiedlichen Grössen. Es zeigen:
- Figur 1 ein Ausführungsbeispiel einer erfindungsgemässen, Anstech- und Ausleitvorrichtung,
- Figur 2 eine Siebfolie für eine Vorrichtung gemäss Figur 1,
- Figur 3 ein Detail zu Figur 2,
- Figur 4 einen Siebträger für eine Vorrichtung gemäss Figur 1,
- Figuren 5-8 je ein weiteres Ausführungsbeispiel einer erfindungsgemässen, Anstech- und Ausleitvorrichtung,
- Figuren 9 und 10 verschiedene Zuschnitte zum Bilden eines Perforationselements für Anstech- und Ausleitvorrichtungen der in Figuren 5, 7 und 8 gezeigten Art,
- Figur 11 einen Zuschnitt zum Bilden eines und eines Rückhaltstegs für Anstech- und Ausleitvorrichtungen der in Figuren 5, 7 und 8 gezeigten Art,
- Figuren 12a-12d schematisch verschiedene Perforationselemente in einer Projektion auf die Auflagefläche,
- Figuren 13-15 als Injektorvorrichtungen ausgebildete Anstechvorrichtungen,
- Figuren 16 und 17 je eine Ausleitvorrichtung (ohne das Siebelement) und eine Injektorvorrichtung nach einer weiteren Ausführungsform der Erfindung, und
- Figuren 18a und 18b Ansichten einer weiteren Ausführungsform eines Perforationselements,
- Figuren 19-21 eine weitere Ausleitvorrichtung, und
- Figuren 22-24 eine weitere Injektorvorrichtung.

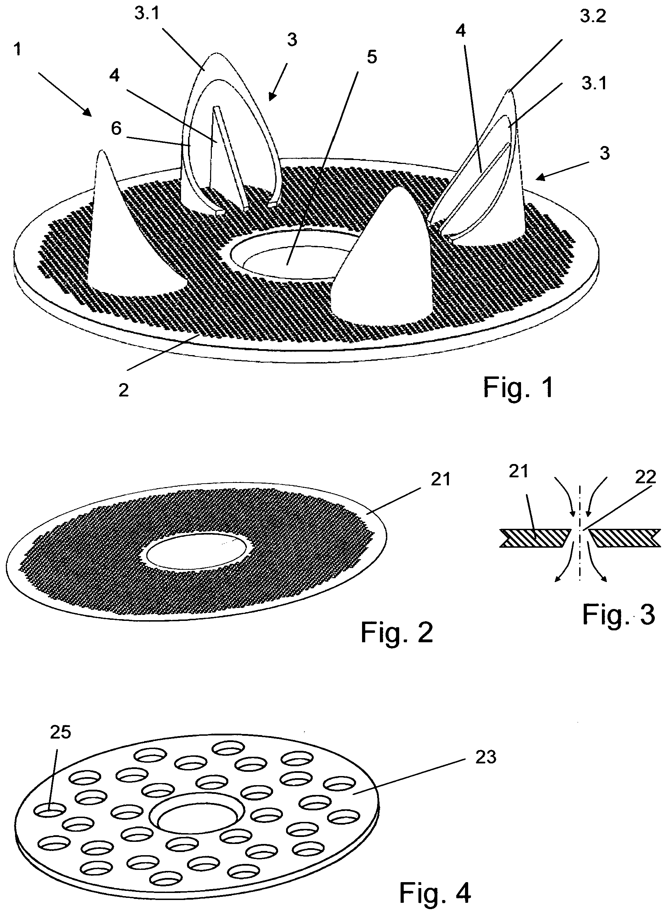

Die in **Figur 1** gezeichnete Ausleitvorrichtung 1 ist als Brühsiebplatte 2 mit einer Mehrzahl von Perforationselementen 3 ausgebildet. Die Brühsiebplatte ist aus einem Siebträger mit oberseitig - d.h. zur Kapsel hin - aufgebrachtem Mikrolochsieb gefertigt, was nachstehend noch eingehender erläutert wird. Sie weist in der Mitte ein Positionierungs- und Zentrierloch 5 auf. Die in Figur 1 obenliegende Fläche der Brühsiebplatte 2 dient als Anlagefläche für die Kapsel.

Jedes der Perforationselemente weist in der dargestellten Ausführungsform ein Perforationskantenteil 6 und einen Rückhaltesteg 4 auf.

Die Perforationskantenteile 6 sind in der Art schräg angeschnittener metallischer Rohrstücke ausgebildet, d.h. sie weisen die Form einer zylindrisch gekrümmten Blechwand mit einer nicht konstanten Breite (entsprechend der Höhe des Perforationselements) auf. Die Dicke der Blechwand beträgt bevorzugt zwischen 0.15 mm und 0.5 mm, beispielsweise zwischen 0.2 mm und 0.3 mm. Das Blechmaterial kann rostfreier Stahl sein.

Die Blechwände stehen senkrecht auf die Anlagefläche, d.h. parallel zur Perforationsrichtung. Am kapselseitigen Ende weisen die Rohrstücke einen in ihrer Dicke sich zu einer Perforationskante hin verjüngenden Bereich 3.1 auf. Der bezogen auf die Perforationsrichtung höchste Punkt der Perforationselemente wird hier als Perforationsspitze 3.2 bezeichnet. Die Perforationselemente sind spiegelsymmetrisch, wobei die Symmetrieebene durch die Perforationsspitze verläuft.

Im gezeichneten Beispiel sind vier Perforationselemente 3 vorhanden, die regelmässig um das Zentrum der Brühsiebplatte herum angeordnet sind. Im allgemeinen Fall ist eine beliebige Anzahl von regelmässig oder unregelmässig angeordneten Perforationselementen vorhanden, wobei die Anzahl der Perforationselemente bevorzugt zwischen 1 und 6 beträgt.

Jedes Perforationselement 3 weist einen Steg 4 (Rückhaltesteg) auf, der ebenfalls im Wesentlichen als im Wesentlichen parallel zur Perforationsrichtung und also senkrecht zur Auflagefläche verlaufende Blechwand ausgebildet ist. Il Unterschied zu den Perforationskantenteilen haben sie jedoch keine perforierende Kante oder Spitze. Vielmehr ist die Kante der Stege 4 so ausgebildet und auf das Kapselmaterial abgestimmt, dass das Kapselmaterial bei den beim Brühprozess herrschenden Drücken durch die Stege nicht durchtrennt oder durchstossen wird. Die Stege 4 stossen an die jeweiligen zugeordneten Perforationskantenteile an. Sie sind jedoch gegenüber den Perforationskantenteilen zurückversetzt, d.h. ihre Höhe in Bezug auf die Perforationsrichtung ist geringer. Die Höhe nimmt ausserdem in Funktion des Abstandes vom Perforationselement ab.

Die Stege verlaufen teilweise im Innern der Perforationselemente, d.h. im Innern des von der jeweiligen Blechwand aufgespannten Raumes.

Während des Brühprozesses haben die Stege die Funktion, die Kapselwandung daran zu hindern, vollständig auf die Siebfläche gedrückt zu werden. Vielmehr wird sich die Kapselwandung während des Brühprozesses in der Art eines Zelts über die Stege legen. Zudem tragen die Rückhaltestege auch dazu bei zu verhindern, dass während des Brühprozesses grössere Mengen an Partikel auf das Brühsieb gelangen, indem die Partikel durch die Kapselwandung zurückgehalten werden.

Die Brühsiebplatte weist einen Siebträger 23 und eine darauf aufgebrachte Siebfolie 21 auf, was in **Figuren 2 und 4** noch deutlicher sichtbar ist. Die Siebfolie 21 kann in der Art an sich bekannter Siebfolien, bspw. als Folie aus rostfreiem Stahl mit einer Dicke von bspw. 0.05-0.1 mm ausgebildet und durch Kleben, Schweissen, Löten oder eine andere bekannte Technik auf dem Siebträger befestigt sein. Die Grösse der Sieblöcher 22 der Siebfolie beträgt bevorzugt zwischen 0.1 mm und 0.3 mm, besonders bevorzugt zwischen 0.15 mm und 0.25 mm (Durchmesser der ungefähr kreisförmigen Löcher an der engsten Stelle). Wie das in **Figur 3** dargestellt ist, können die Sieblöcher 22 einen leicht konischen Verlauf aufweisen. Ein solcher leicht konischer Verlauf ergibt sich bei der Herstellung einer solchen auch als Mikrolochfolie bekannten Siebfolie in einem Ätzverfahren. Bevorzugt wird nun die Siebfolie so auf dem Siebträger befestigt, dass sich die engste Stelle oberseitig, also kapselseitig befindet. Dadurch wird verhindert, dass Partikel des Extraktionsprodukts sich in den Sieblöchern festsetzen können. In Figur 3 ist die Flussrichtung des Extraktionsproduktes durch Pfeile skizziert.

Sofern das Herstellungsverfahren der Mikrolochfolie das erlaubt, können die Sieblöcher abweichend von der Darstellung auch zylindrisch sein.

Der Siebträger 23 ist als metallisches Blech, bspw. ebenfalls aus rostfreiem Stahl, einer Dicke von bspw. zwischen 0.2 mm und 2 mm ausgebildet. Er besitzt eine Mehrzahl von Durchtrittsöffnungen 25, durch die das Extraktionsprodukt von den Sieblöchern her kommend abgeleitet werden kann. Ausleit-Anordnungen zum weiterbefördern von aus Durchtrittselementen kommendem Extraktionsprodukt sind vom Stand der Technik her bekannt und werden hier nicht beschrieben.

Die Durchtrittsöffnungen 25 können auf verschiedene Arten über die Fläche des Siebträgers verteilt sein. Vorzugsweise sind jedoch mindestens dort Durchtrittsöffnungen vorhanden, wo sich die Perforationselemente 3 und die Stege 4 befinden. Beispielsweise kann ein Perforationselement 3 der in Figur 1 gezeichneten Art einen Innendurchmesser aufweisen, der um wenig grösser ist als der Durchmesser der entsprechenden Durchtrittsöffnung des Siebträgers, und kann ungefähr koaxial mit der entsprechende Durchtrittsöffnung angeordnet sein und diese umspannen. Der Steg erstreckt sich dann quer über die Durchtrittsöffnung. Das von der Kapselfolie beim Brühprozess gebildete zeltartige Gebilde befindet sich so in idealer Art über der Durchtrittsöffnung.

Diejenigen Durchtrittsöffnungen, denen kein Perforationselement zugeordnet ist, dienen dem Ausleiten des Extraktionsprodukts, wenn dieses mit einem grossen Fluss anfällt und die den Perforationselementen zugeordneten Durchtrittsöffnungen unter Umständen temporär nicht mehr den ganzen Fluss bewältigen können - das Extraktionsgut kann durch irgend eine der vorgesehenen Durchtrittsöffnungen austreten und wird durch eine bspw. gemeinsame Ableitung abgeführt.

Vorzugsweise ist die Siebfolie oberseitig, d.h. kapselseitig auf dem Siebträger angebracht. Dann stellt sich nicht das Problem von möglichen Verunreinigungen der Durchtrittsöffnungen 25 und die mechanische Belastung der Verbindung zwischen Siebträger und Siebfolie ist geringer.

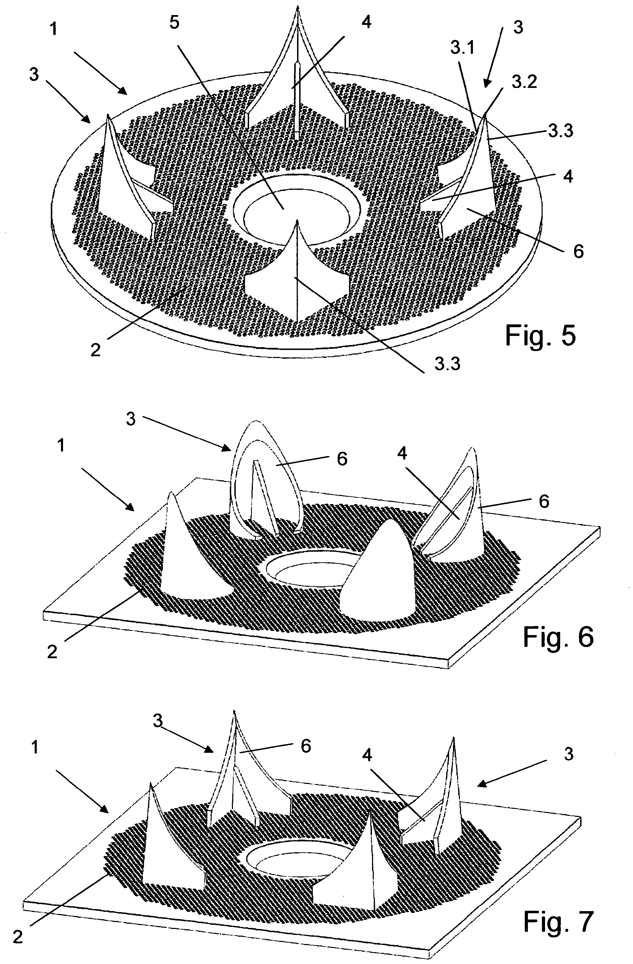

Die in **Figur 5** gezeichnete Ausleitvorrichtung 1 unterscheidet sich von derjenigen gemäss Figuren 1-4 durch die Form der Perforationselemente 3. Die Perforationskantenteile 6 sind in der Art eines entlang einer rückseitigen Kante 3.3 geknickten Blechs ausgebildet. Ausserdem stehen die Blechwände nicht genau senkrecht auf die Auflagefläche sondern sind leicht von der Perforationsrichtung weg geneigt, und zwar nach innen, d.h. hin zum von den Blechwänden aufgespannten Raum. Der Neigungswinkel beträgt vorzugsweise zwischen 0° und 10°, beispielsweise zwischen 2° und 5°.

Die Ausgestaltung der Perforationselemente in der in Fig. 5 dargestellten Art ist erstens günstig, weil sich so eine sehr markante und doch mechanisch sehr stabile Perforationsspitze 3.2 erzeugen lässt. Die mechanische Stabilität ergibt sich daraus, dass die rückseitige Kante 3.3 als Perforationsspitze ausläuft. Zweitens ergeben sich auch herstellungstechnische Vorteile, was nachstehend noch etwas eingehender erläutert wird.

Die Stege 4 der Ausführungsform gemäss Figur können in Ausgestaltung und Funktion denen von Fig. 1 entsprechen, d.h. das zu Figur 1 Erklärte gilt diesbezüglich auch für Figur 5. In der gezeichneten Variante unterscheiden sich die Stege 4 der beiden Ausführungsformen dadurch, dass die Stege 4 gemäss Fig. 1 in ihrer Breite zum vom Perforationskantenteil entfernten Ende hin auslaufen, also als Ganze die Form eines rechtwinkligen Dreiecks haben, während die Stege 4 gemäss Fig. 5 eine viereckige Grundform haben. Betreffend der genauen Ausgestaltung der Stege besteht jedoch eine Designfreiheit; insbesondere würden die Ausleitvorrichtungen auch funktionieren, wenn bspw. die Stege der Figuren 1 und 5 vertauscht würden. Auch andere Stegformen sind denkbar, bspw. eine insgesamt rechteckige Form mit einer abgerundeten oder abgeschrägten Ecke etc.

Die Ausleitvorrichtungen 1 der **Figuren 6 und 7** entsprechen denjenigen der Figuren 1 bzw. 5. Sie unterscheiden sich jedoch in der Form der Brühsiebplatte 2. Diese ist quadratisch. Als solche ist sie geeignet für Kapseln, deren Form von der üblichen rotationssymmetrischen Form abweicht und die bspw. würfelförmig oder quaderförmig sind oder in einen im Querschnitt rechteckigen Bereich zulaufen.

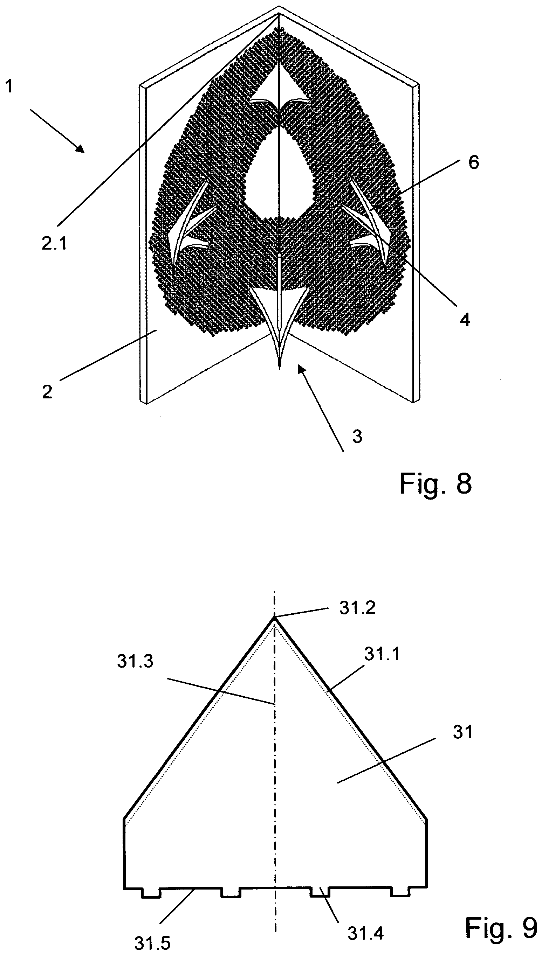

Ganz allgemein ist die Erfindung nicht von der Form der Kapsel abhängig sondern kann im Zusammenhang mit jeder Art von Kapseln, insbesondere Kapsel ohne eigene Filtereinrichtung, zur Anwendung kommen. Dementsprechend sind auch andere Grundrisse der Brühsiebplatte, bspw. rechteckige, sechseckige, elliptische etc. Grundrisse möglich. Weiter ist es auch keinesfalls notwendig, dass die Auflagefläche durch eine im Wesentlichen ebene Brühsiebplatte gebildet wird. Es sind auch Grundelemente mit einer gekrümmten oder geknickten oder in eine Kante 2.1 oder Ecke hinein verlaufenden Ausgestaltung denkbar, die entsprechende nicht ebene oder nur bereichsweise ebene Auflageflächen definieren, wie in **Figur 8** dargestellt. Die Perforationselemente 3 müssen dementsprechend nicht in eine zueinander parallele oder fast parallele Richtung ragen wie in den gezeichneten Ausführungsformen, sondern sie können auch entsprechend der Auflagefläche in unterschiedliche Richtungen ragen. Bevorzugt sind jedoch Ausführungsformen, bei denen die Perforationselemente im Wesentlichen parallel (d.h. höchstens leicht von der Perforationsrichtung weg geneigt, bspw. höchstens um einen Winkel von 10°) zur Perforationsrichtung sind.

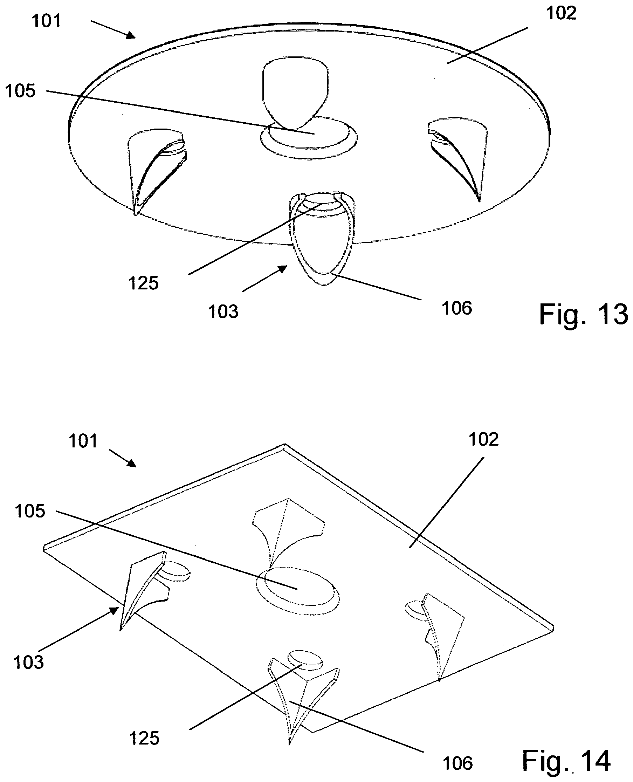

**Figur 9** zeigt einen Zuschnitt 31, bspw. ein Stanzteil oder ein durch Laserschneiden hergestelltes Blechteil, zum Bilden eines Perforationskantenteils wie in den Ausführungsformen gemäss Figur 5 oder 7 oder nachstehend gemäss Figur 14 gezeigt. Das Stanzteil besitzt eine in einer Spitze 31.2 zulaufende Grundform, die nach dem Abkanten entlang der Abkantlinie 31.3 (entsprechende Umformverfahren sind bekannt, bspw. Biegeumformen oder Tiefziehen) zur Perforationsspitze 3.2 wird. Ein sich in seiner Dicke gegen aussen verjüngender Bereich 31.1 zur Bildung der Perforationskante ist ebenfalls eingezeichnet.

Nebst diesen Merkmalen besitzt der Zuschnitt 31 auch eine Mehrzahl von vorstehenden Befestigungsnasen 31.4, die bei der Befestigung an der Brühsiebplatte (bzw. in nachstehend beschriebenen Ausführungsformen auch an der Injektorplatte) in entsprechende Löcher der Brühsiebplatte (bzw. Injektorplatte) eingreifen. Auf der Brühsiebplatte bzw. Injektorplatte unterseitig, d.h. auf der kapselabgewandten Seite der Brühsiebplatte können die Befestigungsnasen mit der Brühsiebplatte bzw. Injektorplatte verschweisst werden. In der Summe ergibt sich unter Verwendung bekannter Blechformtechniken ein bemerkenswert einfaches und daher kostengünstiges Herstellungs- und Befestigungsverfahren der Perforationselemente. Trotzdem sind die mechanische Stabilität und Perforationswirksamkeit sehr gut, aufgrund der gewählten, sich selbst verstärkenden Konstruktion mit ungefähr rechtwinklig zueinander abgekanteten Bereichen.

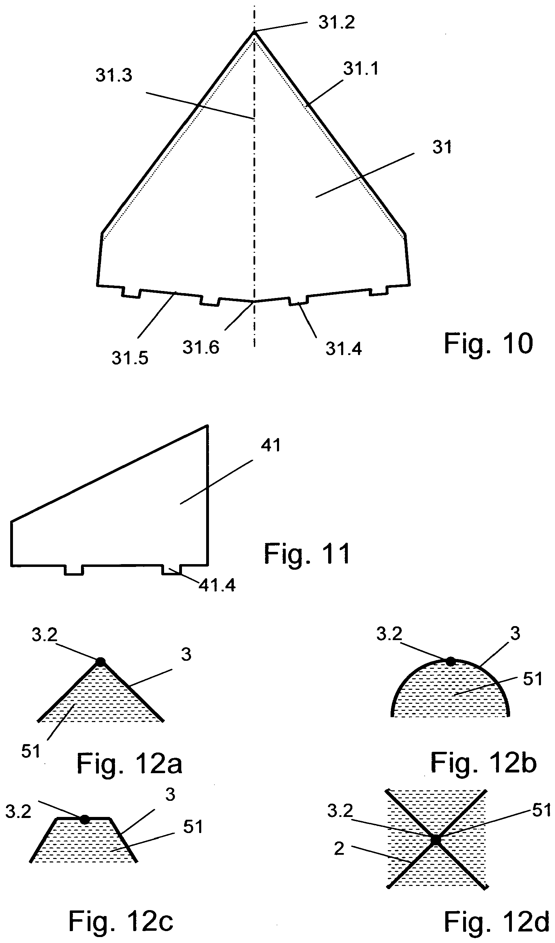

Die Verwendung des Zuschnitts 31 gemäss Figur 9 führt zu rechtwinklig von der Auflagefläche wegragenden, d.h. parallel zur Perforationsrichtung verlaufenden Perforationselementen. Eine leichte Neigung wie in Figuren 5 und 7 gezeichnet erreicht man dadurch, dass die in der Figur 10 unterseitige Basislinie 31.5 (d.h. die Seite, die im zusammengesetzten Zustand an der Auflagefläche anliegt) nicht genau Senkrecht zur Abkantlinie 31.3 verläuft sondern in einem kleinen Winkel zur Senkrechten, so, dass die Basislinie im Schnittpunkt 31.6 mit der Abkantlinie 31.3 einen stumpfen Winkel bildet, wie das in **Figur 10** dargestellt ist.

**Figur 11** zeigt einen Zuschnitt 41 für die Bildung eines Steges der vorstehend beschriebenen Art. Die Befestigung erfolgt wie beim Perforationskantenteil bevorzugt über Befestigungsnasen 41.4.

Perforationselemente der in Figuren 1 und 6 gezeichneten Art können analog an der Brühsiebplatte oder (mit oder ohne Rückhaltesteg) an der Injektorplatte befestigbar sein und können bspw. auch analog hergestellt werden, wobei anstelle des Abkantens ein anderes Blechumformverfahren treten kann (bzw. die Herstellung von einem Metallröhrchen aus erfolgt).

**Figuren 12a-12d** zeigen sehr schematisch das bereits illustrierte Prinzip, wonach die Perforationselemente auf der Auflagefläche eine Teilfläche 51 aufspannen, die sie teilweise umgeben. Die aufgespannte Teilfläche kann mathematisch als "konvexe Hülle" der Projektion der Perforationselemente auf die Auflagefläche definiert werden. Die Siebflächen und die Stege verlaufen bevorzugt mindestens teilweise in dieser aufgespannten Fläche. Figur 12a zeigt die in Figuren 5 und 7 gezeichnete Ausführungsform und Figur 12b entspricht der Variante von Figuren 1 und 6. Figuren 12c und 12d zeigen weitere Varianten. Das Blech in der Ausführungsform gemäss Figur 12c ist zweimal abgekantet, wobei die Perforationsspitze auf der Symmetrieebene liegt. Als Alternative können bspw. auch zwei Perforationsspitzen, jeweils am Ort der Abkantung vorhanden sein. Die Variante gemäss Figur 12d zeigt ein Perforationselement, das aus mehreren Blechstücken zusammengesetzt und daher in der Herstellung etwas aufwändiger ist.

**Figuren 13 - 15** zeigen Ausgestaltungen der Anstechvorrichtung nicht als Ausleitvorrichtung sondern als Injektorvorrichtung 101, durch die die Extraktionsflüssigkeit - im Allgemeinen unter Druck - der Kapsel zugeführt wird. Im Unterschied zur Ausleitvorrichtung benötigt die Injektorvorrichtung kein Sieb, sondern die Extraktionsflüssigkeit wird der Kapsel, die durch die Perforationselemente 103 aufgestochen worden ist, direkt durch die Einleitöffnungen 125 zugeführt. Auch die Stege der Anstechvorrichtung werden nicht unbedingt benötigt, da der Flüssigkeitsdruck beim Brühprozess die Flüssigkeit in die Kapsel hinein und nicht aus dieser hinausdrückt. Stege der anhand der Ausleitvorrichtung beschriebenen Art (in Figuren 13-15 nicht gezeichnet) sind jedoch je nach Kapselmaterial auch bei der Injektorvorrichtung vorteilhaft.

Als weiterer Unterschied zu den gezeichneten Ausführungsformen weist die Injektorplatte 102 lediglich so viele Einleitöffnungen 125 auf wie Perforationselemente vorhanden sind. Es können jedoch im Prinzip auch weitere Einleitöffnungen an anderen Orten platziert werden.

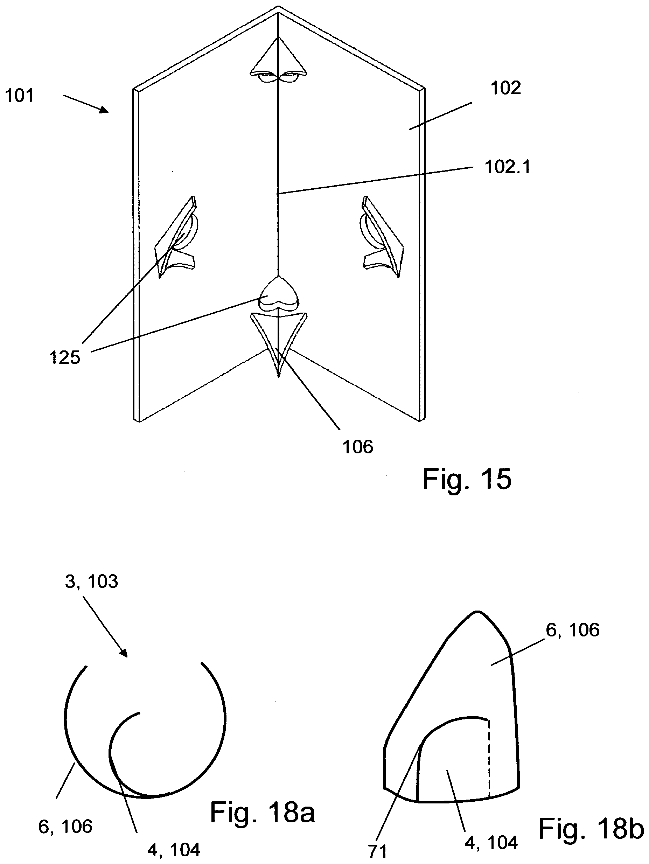

**Figur 13** zeigt eine erste Ausführungsform mit Perforationselementen 103 wie denjenigen der Ausleitvornchtungen gemäss Figuren 1 und 6. In den dargestellten Ausführungsformen bestehen die Perforationselemente aus den Perforationskantenteilen 106; sie können jedoch auch (nicht gezeichnete) Rückhaltestege aufweisen. **Figur 14** zeigt eine zweite Ausführungsform mit einer rechteckigen Injektorplatte und mit Perforationselementen 103 wie den besonders vorteilhaften Perforationselementen der Ausleitvorrichtungen gemäss Figuren 5 und 7. Die Ausführungsform gemäss **Figur 15** weist eine eine Kante 102.1 bildende Injektorplatte 102 auf und ist besonders für eine polyederförmige Kapsel geeignet, bspw. zusammen mit einer Ausleitvorrichtung wie in Figur 8 gezeichnet.

Betreffend Ausgestaltung der Injektorplatte 101 und Ausgestaltung und Anordnung der Perforationselemente 103, der Befestigung der Perforationselemente an der Injektorplatte, sowie auf andere Eigenschaften des Grundelements, bspw. das Positionierungs- und Zentrierloch 105 sei auf die ansonsten analoge Lehre zur Ausleitvorrichtung verwiesen.

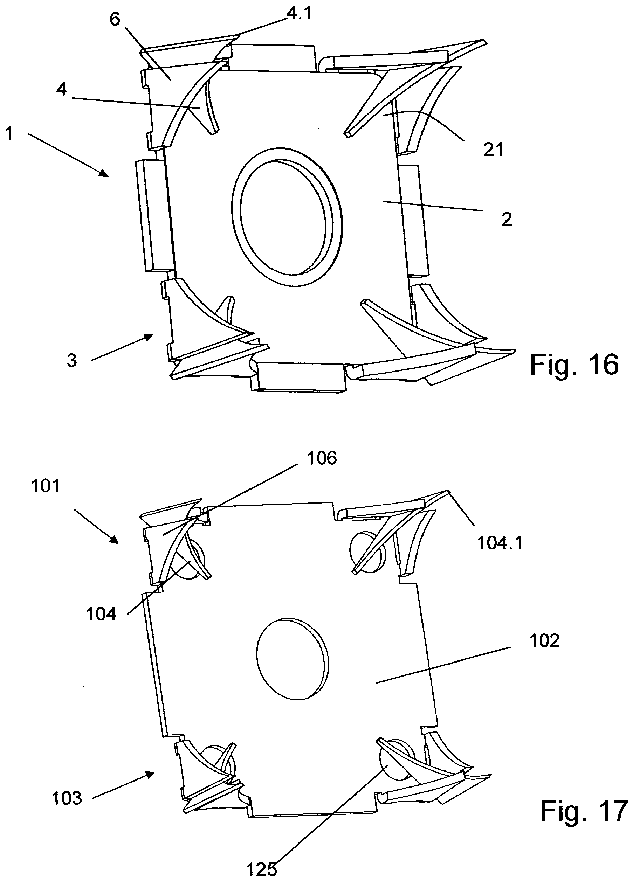

**Figuren 16 und 17** zeigen eine alternative Ausführungsform einer Ausleitvorrichtung 1 bzw. einer Injektorvorrichtung 101. In Figur 16 sind die Sieblöcher des - vorzugsweise ebenfalls vorhandene - Mikrolochsiebs 21 nicht gezeichnet; unter dem Mikrolochsieb wird (in Figur 16 nicht sichtbar) der Siebträger eine Mehrzahl von Durchtrittsöffnungen aufweisen, bspw. wie die Injektorvorrichtung 101 pro Perforationselement 3 eine Durchtrittsöffnung. Von den vorstehend beschriebenen Ausführungsformen unterscheiden sich diese Ausführungsformen durch folgende Merkmale.
- die Rückhaltestege 4, 104 der Perforationselemente ragen in ihrer Höhe (Ausdehnung senkrecht zur Auflagefläche) über die Perforationskantenteile 6, 106 hinaus und sind mit einer Spitze 4.1, 104.1 ausgerüstet, die den Perforationsprozess einleitet und unterstützt. In einem Abstand zur Spitze ist die Kante der Rückhaltestege 4, 104 jedoch wie vorstehend erwähnt nicht schneidend.
- Die Perforationskantenteile 6, 106 sind mit dem Träger (Ausleitvorrichtungsplatte/Brühsiebplatte 2) bzw. Injektorplatte 102 einstückig und durch Abkanten von von diesen vorstehenden Überständen hergestellt. Die Rückhaltestege 4, 104 sind flächig und bspw. mit den vorstehend erwähnten Verfahren befestigt.

Diese beiden Merkmale können unabhängig voneinander implementiert werden.

**Figuren 18a und 18b** illustrieren sehr schematisch eine Schnittdarstellung (Schnitt entlang einer Ebene parallel zur Auflagefläche) und eine Ansicht einer weiteren Ausführungsform eines Perforationselements 3, 103. Bei der Herstellung aus einem metallrohrartigen Ausgangsprodukt wird ein Einschnitt 71 angebracht und der Rückhaltesteg 4, 104 durch biegen des dadurch entstehenden Flügels nach innen (siehe Fig. 18a) gebildet. Dadurch ist das Perforationselement 3, 103 mit Perforationskantenteil 6, 106 und Rückhaltesteg 4, 104 einstückig.

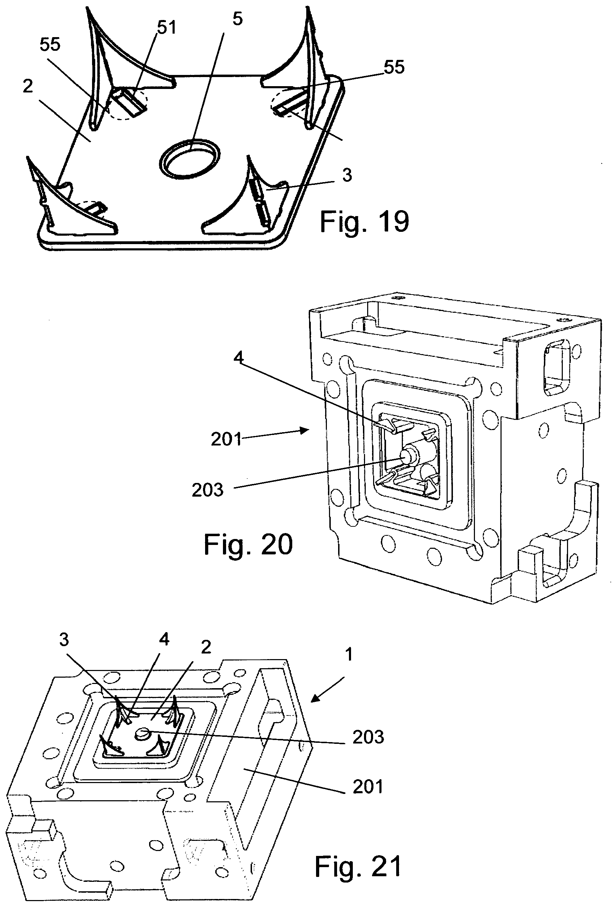

Die Rückhaltestege insbesondere der Brühsiebplatte 2, und gegebenenfalls auch der Injektorplatte haben keine perforierende Funktion sondern sollen beim Anstechvorgang und auch anschliessend beim Brühen die (Kunststoff-) Wandung der Kapsel nicht durchtrennen. Die Rückhaltestege können daher gemäss speziellen Ausführungsformen der Erfindung auch aus einem Material sein, dessen Härte die Bildung einer sehr scharfen Schneidkante oder Spitze zum Perforieren einer Polypropylen-Kapselwandung mit einer üblichen Wandstärke von bspw. zwischen 0.2 mm und 0.4 mm nicht erlauben würde. Sie können also insbesondere aus einem anderen Material gefertigt sein als die perforierenden Elemente selbst. Anhand von Figuren 19-24 werden Ausführungsformen beschrieben, bei denen die Rückhaltestege aus einem anderen Material sind als die Perforationsspitzen und Schneidekanten, und bei denen dies genutzt wird, um eine kostengünstige Herstellung der entsprechenden Vorrichtung sicherzustellen.

Die Ausleitvornchtung 1 weist gemäss **Figuren 19-21** nebst dem Grundelement (der Brühsiebplatte 2) auch einen Ausleitvorrichtung-Träger 201 auf. Auf diesen wird das Grundelement 2 mit den Perforationselementen 3 aufgebracht, wobei ein Führungszapfen 203 in das Positionierungs- und Zentrierloch 5 eingreift. Der Ausleitvorrichtung-Träger 201 ist ein Kunststoffkörper, beispielsweise mittels Spritzguss hergestellt. Am Ausleitvorrichtung-Träger 201 sind die Stege 4 angeformt, welche die Rückhaltestege bilden. Zu diesem Zweck durchdringen die Stege 4 entsprechende Steg-Öffnungen 51 der Brühsiebplatte. Wie man in Figur 21 sieht, liegen die Führungsstege so, dass sie an die Perforationskantenteile anstossen oder in einem nur kleinen Abstand von diesen sind. Sie sind ausserdem gegenüber den Perforationskantenteilen zurückversetzt, d.h. ihre Höhe in Bezug auf die Perforationsrichtung ist geringer, auch nimmt die Höhe in Funktion des Abstandes vom Perforationselement ab. Die Geometrie der Perforationselemente mit den Rückhaltestegen ist ähnlich zur anhand Figur 5 beschriebenen Geometrie.

In Figur 19 sind die Sieblöcher der Brühsiebplatte nicht gezeichnet. Die gestrichelten Linien 55 geben die ungefähre Position der unter der Mikrolochfolie liegenden Durchtrittsöffnungen des Siebträgers an.

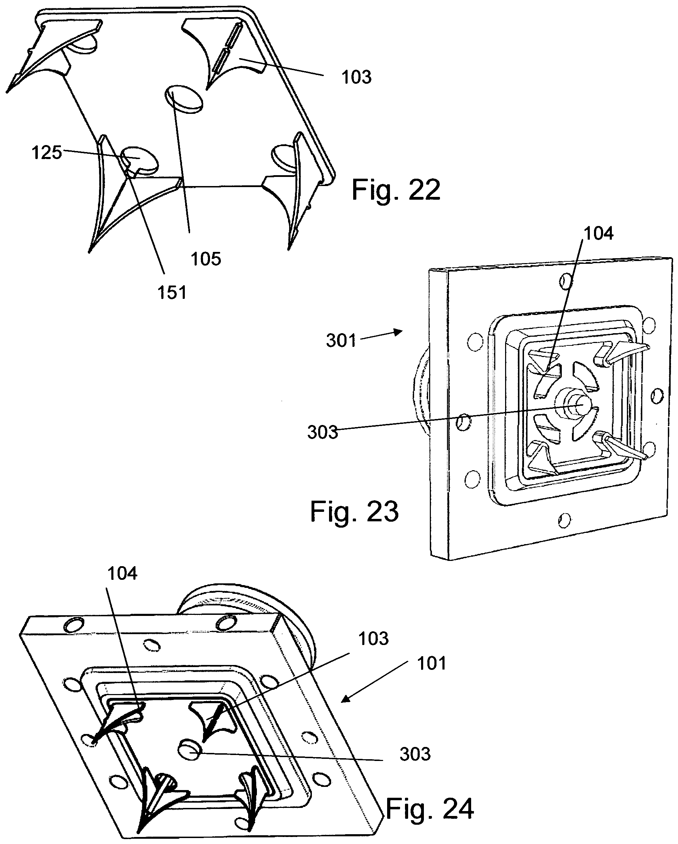

**Figuren 22 bis 24** zeigen eine analoge Konstruktion für eine Injektorvorrichtung 101. Die Einleitöffnungen 125 der Injektorplatte 102 weisen einen zu den Perforationselementen 103 hin ragenden Fortsatz 151 auf und bilden gleichzeitig die Steg-Öffnungen für die - optionalen - Rückhaltestege 104 der Injektorvorrichtung. Diese Rückhaltestege 104 sind am Injektorvorrichtung-Träger 301 angeformt, der ebenfalls als Kunststoff-Spritzgussteil vorhanden ist. Das Bezugszeichen 303 bezeichnet den Führungszapfen 303 des Injektorvorrichtung-Trägers 303, welcher in das Positionierungs- und Zentrierloch 105 eingreift.

## Patentansprüche

1. Vorrichtung zum Ausleiten eines Extraktionsprodukts aus einer Kapsel mit Extraktionsgut oder einem Extrakt, aufweisend eine Auflagefläche für die Kapsel sowie mindestens ein aus der Auflagefläche herausragendes, eine Perforationsspitze und/oder Perforationskante zum Perforieren der Kapsel aufweisendes Perforationselement (3), **dadurch gekennzeichnet, dass** die Auflagefläche durch einen mindestens abschnittsweise flachen Siebträger (23) mit mindestens einer Durchleitöffnung und ein flächig am Siebträger angebrachtes, die Durchleitöffnung überspannendes Siebelement (21) gebildet wird, durch welches ein Extraktionsprodukt aus der Kapsel ausleitbar ist, das durch eine vom dem mindestens einen Perforationselement (3) erzeugte Öffnung aus der Kapsel austritt.

2. Vorrichtung nach Anspruch 1, **dadurch gekennzeichnet, dass** Sieblöcher (22) des Siebelements (21) einen Durchmesser von zwischen 0.1 mm und 0.3 mm aufweisen.

3. Vorrichtung nach einem der vorangehenden Ansprüche, **gekennzeichnet durch** mindestens einen aus der Auflagefläche herausragenden, eine nicht schneidende Kante aufweisenden Rückhaltesteg (4), der ein Anliegen einer Wandung der Kapsel an der Auflagefläche in einer Umgebung des Rückhaltestegs (4) verhindert, indem die Wandung der Kapsel an der genannten Kante anliegt.

4. Vorrichtung nach Anspruch 3, **dadurch gekennzeichnet, dass** der Rückhaltesteg (4) in Relation zu einer Perforationskante des Perforationselements (3) so angeordnet ist, dass er ein Anliegen einer Wandung der Kapsel an der Auflagefläche in einer Umgebung der Perforationskante (3.1) verhindert.

5. Vorrichtung nach Anspruch 4, **dadurch gekennzeichnet, dass** der Rückhaltesteg (4) an ein die Perforationskante bildendes Perforationskantenteil (6) anstösst oder mit diesem einstückig ist, wobei der Rückhaltesteg in Bezug auf eine Perforationsrichtung im Vergleich zur Perforationskante zurückversetzt ist.

6. Vorrichtung nach einem der Ansprüche 3 bis 5, **dadurch gekennzeichnet, dass** der Rückhaltesteg (4) parallel zu einer Perforationsrichtung verlaufend ausgebildet ist.

7. Vorrichtung nach Anspruch 6, **dadurch gekennzeichnet, dass** der Rückhaltesteg eine parallel zur Perforationsrichtung gemessene nicht konstante, in Funktion der Distanz von einer perforierenden Kante des Perforationselements (3) abnehmende Ausdehnung aufweist.

8. Vorrichtung nach einem der Ansprüche 3 bis 7, **dadurch gekennzeichnet, dass** der Rückhaltesteg (4) an einem Träger (201) angeformt ist, an welchem der Siebträger befestigt ist, und dass der Rückhaltesteg den Siebträger (23) aus der Auflagefläche herausragend durchstösst.

9. Vorrichtung nach einem der vorangehenden Ansprüche, **dadurch gekennzeichnet, dass** das Perforationselement (3) die Form eines von der Auflagefläche abstehenden Blechs aufweist, wobei das Blech gekrümmt ist, oder aus mehreren in einem Winkel zueinander stehenden Blechstücken zusammengesetzt ist.

10. Vorrichtung nach einem der vorangehenden Ansprüche, **dadurch gekennzeichnet, dass** das Perforationselement (3, 103) die Form eines von der Auflagefläche abstehenden Blechs aufweist, wobei das Blech gekrümmt ist, oder aus mehreren in einem Winkel zueinander stehenden Blechstücken zusammengesetzt ist.

11. Vorrichtung nach Anspruch 10, **dadurch gekennzeichnet, dass** das Blech ungefähr senkrecht, d.h. in einem Winkel von zwischen 80° und 90° zur Auflagefläche steht.

12. Vorrichtung nach Anspruch 10 oder 11, **dadurch gekennzeichnet, dass** mindestens eine Durchleitöffnung (25, 125) im Grundelement in einer vom Perforationselement (3, 103) aufgespannten Fläche (51) vorhanden ist.

13. Vorrichtung nach einem der Ansprüche 10-12, **dadurch gekennzeichnet, dass** das Perforationselement ein Blech aufweist, das zwei in einem Winkel von bspw. ungefähr 90° zueinander stehende, zueinander abgekantete Blechpartien aufweist.

14. Vorrichtung nach Anspruch 13, **dadurch gekennzeichnet, dass** sich die durch die Abkantung gebildete Kante (3.3) an einer Stelle einer grössten Ausdehnung des Blechs befindet, weshalb durch einen Endpunkt der Kante eine Perforationsspitze (3.2) gebildet wird.

15. Extraktionsgerät, beispielsweise Kaffeemaschine, zum portionenweisen Zubereiten eines Getränkes oder anderen Extraktionsprodukts aus einem in einer Kapsel verpackten Extraktionsgut, aufweisend eine nach einem der Ansprüche 1-14 ausgebildete Vorrichtung zum Ausleiten des Extraktionsprodukts und/oder eine nach einem der Ansprüche 10-14 ausgebildete Injektorvorrichtung zum Einleiten einer Extraktionsflüssigkeit in die Kapsel.

## Claims

1. A device for discharging an extraction product from a capsule containing extraction material or an extract, the device comprising a supporting surface for the capsule and at least one perforation element (3) which projects from the supporting surface and comprises a perforation tip and/or perforation edge for perforating the capsule, **characterized in that** the supporting surface is formed by a sieve support (23), which is flat at least in sections and has at least one passage opening, and a sieve element (21), which is mounted flat on the sieve support and covers the passage opening, wherein an extraction product is capable of being discharged from the capsule through said sieve element, the said extraction product emerging from the capsule through an opening which is produced by the at least one perforation element (3).

2. The device according to claim 1, **characterized in that** the perforations (22) in the sieve element (21) comprise a diameter of between 0.1 mm and 0.3 mm.

3. The device according to claim 1 or 2, **characterized by** at least one retaining web (4) which projects from the supporting surface, comprises a non-cutting edge and prevents a wall of the capsule from bearing against the supporting surface in an area surrounding the retaining web (4) by the wall of the capsule bearing against said edge.

4. The device according to claim 3, **characterized in that** the retaining web (4) is arranged in relation to a perforation edge of the perforation element (3) in such a manner that it prevents a wall of the capsule from bearing against the supporting surface in an area surrounding the perforation edge (3.1).

5. The device according to claim 4, **characterized in that** the retaining web (4) butts against a perforation edge part (6) which forms the perforation edge or is integrally formed with said perforation edge part, wherein the retaining web is offset with regard to a perforation direction in comparison to the perforation edge.

6. The device according to any one of claims 3 to 5, **characterized in that** the retaining web (4) is designed to run parallel to a perforation direction.

7. The device according to claim 6, **characterized in that** the retaining web comprises an extent which, measured parallel to the perforation direction, is not constant and decreases as a function of the distance from a perforating edge of the perforation element (3).

8. The device according to any one of claims 3 to 7, **characterized in that** the retaining web (4) is formed on a support (201) to which the sieve support is fastened, and **in that** the retaining web extends through the sieve support (23) and projects from the supporting surface.

9. The device according to any one of claims 1 to 8, **characterized in that** the perforation element (3) comprises the form of a metal sheet protruding from the supporting surface, wherein the metal sheet is bent or composed of a plurality of sheet metal pieces which are positioned at an angle relative to one another.

10. The device according to any one of claims 1 to 9, **characterized in that** the perforation element (3, 103) comprises the form of a metal sheet protruding from the supporting surface, with the metal sheet being bent, or is composed of a plurality of sheet metal pieces which are positioned at an angle relative to one another.

11. The device according to claim 10, **characterized in that** the metal sheet is positioned approximately perpendicular, that is to say at an angle of between 80° and 90°, relative to the supporting surface.

12. The device according to claim 10 or 11, **characterized in that** at least one passage opening (25, 125) in the base element is provided in a plane (51) spanned by the perforation element (3, 103).

13. The device according to any one of claims 10 to 12, **characterized in that** the perforation element comprises a metal sheet comprising two sheet metal parts which are positioned at an angle of, for example, approximately 90° relative to one another and are kinked relative to one another.

14. The device according to claim 13, **characterized in that** the edge (3.3) formed by the kink is located at a point of a maximum extent of the metal sheet, and therefore a perforation tip (3.2) is formed by an end point of the edge.

15. An extraction apparatus, for example a coffee machine, for preparing individual portions of a beverage or another extraction product from an extraction material which is packaged in a capsule, comprising a device designed according to one of claims 1 to 14 for discharging the extraction product and/or an injector device designed according to one of claims 10 to 14 for introducing an extraction liquid into the capsule.

## Revendications

1. Dispositif pour guider la sortie d'un produit d'extraction hors d'une capsule contenant un matériau d'extraction ou un extrait, le dispositif présentant une surface de pose de la capsule ainsi qu'au moins un élément perforant (3) débordant hors de la surface de pose et présentant une pointe perforante et/ou une arête perforante pour perforer la capsule,
**caractérisé en ce que**
la surface de pose est formée par un porte-tamis (23) dont au moins certaines parties sont planes et présentant au moins une ouverture de guidage de traversée et un élément de tamis (21) placé à plat sur le porte-tamis, couvrant l'ouverture de guidage de traversée et permettant de guider la sortie hors de la capsule d'un produit d'extraction qui sort de la capsule par une ouverture formée par le ou les éléments perforants (3).

2. Dispositif selon la revendication 1, **caractérisé en ce que** les trous (22) de l'élément de tamis (21) ont un diamètre compris entre 0,1 mm et 0,3 mm.

3. Dispositif selon l'une des revendications précédentes, **caractérisé par** au moins une nervure de retenue (4) qui déborde hors de la surface de pose, qui présente une arête non tranchante et qui empêche qu'une paroi de la capsule repose contre la surface de pose aux alentours de la nervure de retenue (4) par le fait que la paroi de la capsule repose sur ladite arête.

4. Dispositif selon la revendication 3, **caractérisé en ce que** la nervure de retenue (4) est disposée par rapport à une arête perforante de l'élément perforant (3) de manière à empêcher qu'une paroi de la capsule vienne se placer sur la surface de pose au voisinage de l'arête perforante (3.1).

5. Dispositif selon la revendication 4, **caractérisé en ce que** la nervure de retenue (4) vient buter contre une partie (6) qui forme l'arête perforante ou est formée d'un seul tenant avec celle-ci, la nervure de retenue étant en retrait par rapport à l'arête perforante dans la direction de perforation.

6. Dispositif selon l'une des revendications 3 à 5, **caractérisé en ce que** la nervure de retenue (4) s'étend parallèlement à une direction de perforation.

7. Dispositif selon la revendication 6, **caractérisé en ce que** la nervure de retenue présente une extension non constante dans une direction parallèle à la direction de perforation et qui diminue en fonction de la distance par rapport à une arête perforante de l'élément perforant (3).

8. Dispositif selon l'une des revendications 3 à 7, **caractérisé en ce que** la nervure de retenue (4) est formée sur un support (201) sur lequel est fixé le porte-tamis et **en ce que** la nervure de retenue traverse le porte-tamis (3) en débordant de la surface de pose.

9. Dispositif selon l'une des revendications précédentes, **caractérisé en ce que** l'élément perforant (3) présente la forme d'une tôle en saillie par rapport à la surface de pose, la tôle étant cintrée, ou est composé de plusieurs pièces de tôle disposées obliquement les unes par rapport aux autres.

10. Dispositif selon l'une des revendications précédentes, **caractérisé en ce que** l'élément perforant (3, 103) présente la forme d'une tôle en saillie par rapport à la surface de pose, la tôle étant cintrée, ou est composé de plusieurs pièces de tôle disposées obliquement les unes par rapport aux autres.

11. Dispositif selon la revendication 10, **caractérisé en ce que** la tôle est disposée sensiblement à la perpendiculaire, c'est-à-dire sous un angle compris entre 80° et 90°, de la surface de pose.

12. Dispositif selon les revendications 10 ou 11, **caractérisé en ce qu'**au moins une ouverture (25, 125) de guidage de traversée est prévue dans l'élément de base dans une surface (51) sous-tendue par l'élément perforant (3, 103).

13. Dispositif selon l'une des revendications 10 à 12, **caractérisé en ce que** l'élément perforant présente une tôle qui présente deux parties en tôle coudées l'une par rapport à l'autre et formant une par rapport à l'autre un angle par exemple d'environ 90°.

14. Dispositif selon la revendication 13, **caractérisé en ce que** l'arête (3.3) formée par le coude est située à un emplacement d'une plus grande extension de la tôle, grâce à quoi une pointe perforante (3.2) est formée par un point d'extrémité de l'arête.

15. Appareil d'extraction, par exemple machine à café, pour la préparation portionnée d'une boisson ou d'un autre produit d'extraction à partir d'un matériau d'extraction emballé dans une capsule, présentant un dispositif configuré selon l'une des revendications 1 à 14 pour guider de la sortie du produit d'extraction et/ou un dispositif d'injection configuré selon l'une des revendications 10 à 14 pour guider l'introduction d'un fluide d'extraction dans la capsule.
